# EUROPÄISCHE PATENTSCHRIFT

(11) **EP 0 889 161 B1**
(45) Veröffentlichungstag und Bekanntmachung des Hinweises auf die Patenterteilung: **23.04.2003**
(21) Anmeldenummer: 98108880.0
(22) Anmeldetag: 15.05.1998
(51) Int. Cl.: D21F 1/00, D21F 7/08, B65G 15/34, D21F 1/30

(54) **Maschine zur Herstellung einer kontinuierlichen Materialbahn**
Machine for manufacturing a continuous web material
Machine pour la fabrication d'un matériau en bande continue

(30) Priorität: 03.07.1997 DE 19728399
(43) Veröffentlichungstag der Anmeldung: 07.01.1999
(73) Patentinhaber: Voith Paper Patent GmbH, 89522 Heidenheim (DE)
(72) Erfinder: Schiel, Christian, 82418 - Murnau (DE); Straub, Karlheinz, 89518 - Heidenheim (DE)

(56) Entgegenhaltungen:
- EP-A- 0 388 601
- EP-A- 0 704 572
- GB-A- 1 117 953
- US-A- 5 422 166

## Beschreibung

Die Erfindung betrifft eine Maschine zur Herstellung einer kontinuierlichen Materialbahn gemäß Oberbegriff des Anspruchs 1.

Maschinen und Bänder der hier angesprochenen Art sind bekannt. Bei bekannten Maschinen dieser Art, beispielsweise bei Papiermaschinen, wird in verschiedenen Sektionen, beispielsweise in Former-, Pressen- und/oder Trockensektionen, der Antrieb auf verschiedene Arten realisiert. Es ist beispielsweise möglich, (Trocken-)Siebe und Filze über mehrere angetriebene Walzen in Bewegung zu setzen. Dabei ist es möglich, Antriebseinrichtungen, also Motoren oder dergleichen, direkt mit den Walzen oder über Getriebe mit diesen zu verbinden. Nachteilig bei dem Einsatz von Getrieben ist die starke Lärmentwicklung. Eine weitere Möglichkeit besteht darin, die Walzen über stirnseitig angebrachte Riemenscheiben anzutreiben. Dabei kann ein Motor auch mehrere Walzen in Rotation versetzen.

Es ist auch möglich, mehrere Walzen beziehungsweise Trockenzylinder einer Gruppe über Zahnräder miteinander zu koppeln und dabei zum Beispiel einen Motor pro Gruppe einzusetzen. Wenn auch dadurch eine gute Synchronisation erreichbar ist, so erhöht sich jedoch der Lärm nachhaltig. Auch steigen die Kosten für die Realisierung des Antriebs der Maschine.

Es hat sich als nachteilig herausgestellt, daß die Bänder, die eine endlose Schlaufe bilden und einen Umfang von beispielsweise 20 bis 30 m und mehr haben, die gesamte Antriebskraft aufnehmen müssen und einer Dehnung unterworfen werden. Dies beeinträchtigt die Herstellung der Materialbahn nachteilig. Es ist möglich, daß die Materialbahn, beispielsweise eine Papierbahn, bei einer Dehnung des Bandes entsprechend gedehnt wird, oder daß Relativbewegungen zwischen dem Band und der Materialbahn eintreten. Beide Phänomene wirken sich negativ auf die Eigenschaften der Materialbahn aus. Es ist zwar möglich, diese negativen Einflüsse dadurch zu reduzieren, daß mehrere Antriebe für ein Band verwendet werden. Doch erhöhen sich dadurch die Kosten für die Maschine. Außerdem ist es erforderlich, Steuerund/oder Regelungseinrichtungen einzusetzen, um eine exakte Geschwindigkeitsabstimmung zwischen den Antrieben zu erreichen.

Besonders früher wurden auch Riemenantriebe realisiert, die sich allerdings durch einen großen Platzbedarf auszeichnen, der sich aufgrund der notwendigen Schutzabdeckungen ergibt. Überdies ist die Zugänglichkeit der Maschine insbesondere dann erschwert, wenn mehrere Walzen über Transmissionsriemen angetrieben werden. Aus der GB1117953 sowie der US 5422166 sind Lösungen bekannt, die Bänder zonenweise verschleißfester zu gestalten.

Es ist daher Aufgabe der Erfindung, eine Maschine zur Herstellung einer kontinuierlichen Materialbahn sowie ein Band zur Verwendung in einer derartigen Maschine zu schaffen, bei der die hier angesprochenen Nachteile auf ein Minimum reduziert oder möglichst ganz verhindert werden.

Zur Lösung dieser Aufgabe wird eine Maschine vorgeschlagen, die die in Anspruch 1 genannten Merkmale aufweist. Dadurch, daß das Band über seine Breite mindestens zwei Zonen aufweist, die unterschiedliche Eigenschaften zeigen, ist es möglich, wenigstens eine Zone vorzusehen, die besonders darauf ausgelegt ist, Antriebskräfte auf die Walzen zu übertragen. Eine andere Zone kann dann auf die Materialbahn abgestimmt werden. Auf zusätzliche Antriebsmittel kann verzichtet werden. Gleichzeitig ist sichergestellt, daß durch die spezielle Auslegung dieser der Übertragung von Antriebskräften zugeordneten Zone eine Dehnung des Bandes bei den im Betrieb der Maschine auftretenden Kräfte zu vermeiden. Damit wird verhindert, daß die Materialbahn, die mit dem Band durch die Maschine geführt wird, gedehnt wird oder daß zwischen Materialbahn und Band Relativbewegungen auftreten, die die Eigenschaften der Materialbahn negativ beeinflussen. Es ist also möglich, auf einfache Weise einen Antrieb für die Maschine zu realisieren, ohne daß die genannten Nachteile auftreten.

Bevorzugt wird eine Ausführungsform der Maschine, die sich dadurch auszeichnet, daß die der Übertragung von Antriebskräften zugeordnete Zone außerhalb des Bereiches des Bandes liegt, auf dem die Materialbahn geführt wird. Dies wird dadurch realisiert, daß die Breite des Bandes auf die Breite der Materialbahn so abgestimmt ist, daß die der Übertragung von Antriebskräften dienende Zone die Materialbahn vorzugsweise nicht berührt. Auf diese Weise können die Bandeigenschaften auf die jeweilige Funktion optimal abgestimmt werden: Im Berührungsbereich mit der Materialbahn wird das Band so gewählt, daß sich keinerlei Nachteile für die Materialbahn ergeben. Die außerhalb des Materialbahnbereiches liegende Zone kann speziell auf die Übertragung von Antriebskräften ausgelegt werden, ohne daß dadurch negative Einflüsse auf die Materialbahneigenschaften eintreten können.

Weitere Ausgestaltungen ergeben sich aus den übrigen Unteransprüchen.

Die Erfindung wird im folgenden anhand der Zeichnung näher erläutert. Es zeigen:
- Figur 1: eine Teilansicht einer Maschine zur Herstellung einer kontinuierlichen Materialbahn beziehungsweise eines Bandes zur Verwendung in einer derartigen Maschine;
- Figur 2: eine erste abgewandelte Ausführungsform einer Maschine beziehungsweise eines Bandes gemäß Figur 1;
- Figur 3: eine Prinzipskizze zur Darstellung einer abgewandelten Ausführungsform einer Maschine beziehungsweise eines Bandes gemäß Figur 1 und
- Figur 4: eine Prinzipskizze eines Teils einer Maschine zur Herstellung einer Materialbahn, nämlich eine Schuhpresse sowie eines Bandes.

Im folgenden wird rein beispielhaft davon ausgegangen, daß es sich bei der Maschine zur Herstellung einer Materialbahn um eine Papierherstellungsmaschine handelt und daß das Band in einer derartigen Maschine verwendet wird.

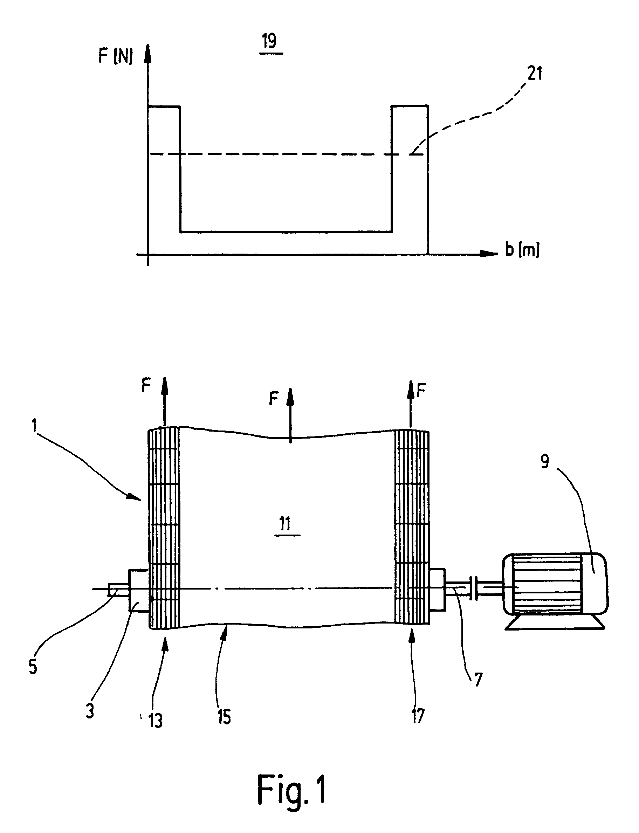

Aus Figur 1 ist ein Ausschnitt einer Maschine 1 zur Herstellung einer Materialbahn ersichtlich, nämlich eine Walze 3, die an ihren Enden mit Lagerzapfen 5 und 7 versehen ist. Diese wirken mit hier nicht dargestellten Lagereinrichtungen zusammen. An dem rechten Lagerzapfen 7 greift eine Antriebseinrichtung, hier ein Elektromotor 9, an, der ein Drehmoment in die Walze 3 einleitet. Der Elektromotor 9 ist auf der sogenannten Triebseite der Maschine 1 angeordnet.

Über die Walze 3 ist ein Band 11 geführt. Es kann sich hier um ein (Trocken-)Sieb oder um einen Filz handeln. Allgemein kann man auch von einem Trockenband sprechen, mit dessen Hilfe die hier nicht dargestellte Materialbahn über die Walze 3 und durch die Papiermaschine 1 geführt wird.

Das Band 11 zeichnet sich durch drei Zonen 13, 15 und 17 aus. Die beiden randständigen Zonen 13 und 17 dienen der Übertragung der von der Walze 3 ausgeübten Antriebskräfte. Ihre Eigenschaften weichen von denen der mittleren Zone 15 ab. Grundsätzlich ist es möglich, auf eine der beiden randständigen Zonen 13 beziehungsweise 17 zu verzichten.

Die Maschine 1 beziehungsweise das Band 11 sind so ausgelegt, daß die randständigen Zonen 13 und 17 dazu ausgelegt sind, die Antriebskräfte zu übertragen. Dazu ist vorgesehen, daß die Randzonen extrem zugsteif ausgelegt sind, daß heißt, einen großen E-Modul aufweisen. Wird beispielsweise ein Band 11 aus Gewebe verwendet, beziehungsweise ein Band, dessen Randzonen aus Gewebe bestehen, so ist vorgesehen, daß hier wesentlich mehr Fäden, Bänder oder dergleichen in Laufrichtung als in Querrichtung enthalten sind.

Die Breite des Bandes 11 ist so ausgelegt, daß die Zonen 13 und 17 mit der innerhalb der Maschine 1 geführten Materialbahn praktisch nicht in Berührung treten beziehungsweise allenfalls deren Randbereiche berühren. Es ist daher möglich, für die Zonen 13 und 17 Materialien zu verwenden, die nicht auf die Herstellung der Materialbahn abgestimmt sind. Deutlich ist, daß die mittlere Zone 15 wesentlich breiter ist als die randständigen Zonen 13 und 17.

Die mittlere Zone 15 des Bandes 11 ist vorzugsweise besonders auf die Herstellung der Materialbahn abgestimmt. Beispielsweise kann auf der der Materialbahn, beispielsweise einer Papierbahn, zugewandten Seite eine feine, markierungsfreie Oberflächengestaltung vorgesehen werden. Im Bereich der Pressenpartie einer Papierherstellungsmaschine werden besonders Bänder 11 bevorzugt, deren mittlere, der Papierbahn zugeordnete Zone 15 wasseraufnehmende Eigenschaften aufweist. In der Siebpartie beziehungsweise im Bereich des Formers werden wasserdurchlässige Eigenschaften der Zone 15 bevorzugt. In der Trockenpartie werden Bänder 11 bevorzugt, deren Zone 15 dampf- und luftdurchlässig ist, damit eine optimale Trocknung der Material- beziehungsweise Papierbahn möglich ist. Im übrigen wird bei Bändern 11, die als Transportbänder eingesetzt werden, bevorzugt, daß die Zone 15 flexibel ist und möglichst kein Wasser aufnimmt. Da in dieser mittleren Zone 15 keine beziehungsweise praktisch keine Antriebskräfte übertragen werden müssen, kann das Band 11 im Bereich dieser Zone vollständig, zumindest sehr weitgehend auf diese Anforderungen abgestimmt werden.

Entsprechend sind also, wie gesagt, die Randbereiche beziehungsweise Zonen 13 und 17 so ausgelegt, daß sie die Antriebskräfte praktisch völlig übernehmen.

Bei der Darstellung gemäß Figur 1 ist das Band 11 einstückig ausgebildet, das heißt, die Zonen 13, 15 und 17 sind integraler Bestandteil des Bandes 11. Es ist jedoch auch möglich, die randständigen Zonen 13 und 17 getrennt von der mittleren Zone 15 auszubilden.

In Figur 1 ist oberhalb der Darstellung der Maschine 1 ein Diagramm 19 wiedergegeben, in dem die in der Bahn 11 wirkenden Kräfte F über der Breite b der Bahn 11 wiedergegeben sind. Deutlich ist erkennbar, daß im Bereich der randständigen Zonen 13 und 17 die in Bewegungsrichtung der Bahn 11 wirkenden Kräfte wesentlich größer sind als in der mittleren Zone 15. Es ist vorteilhaft, wenn auch hier geringe Kräfte wirken, damit sich das Band 11 beim Durchlaufen der Maschine 1 nicht verzieht.

Mit einer gestrichelten Linie 21 ist angedeutet, daß die in dem Band 11 wirkenden Kräfte bei einer herkömmlichen Maschine, deren Band 11 keine hier beschriebenen Zonen umfaßt, in etwa horizontal verläuft. Das heißt, bei derartigen Bändern beziehungsweise Maschinen verteilen sich die Antriebskräfte etwa gleichmäßig über die Breite des Bandes.

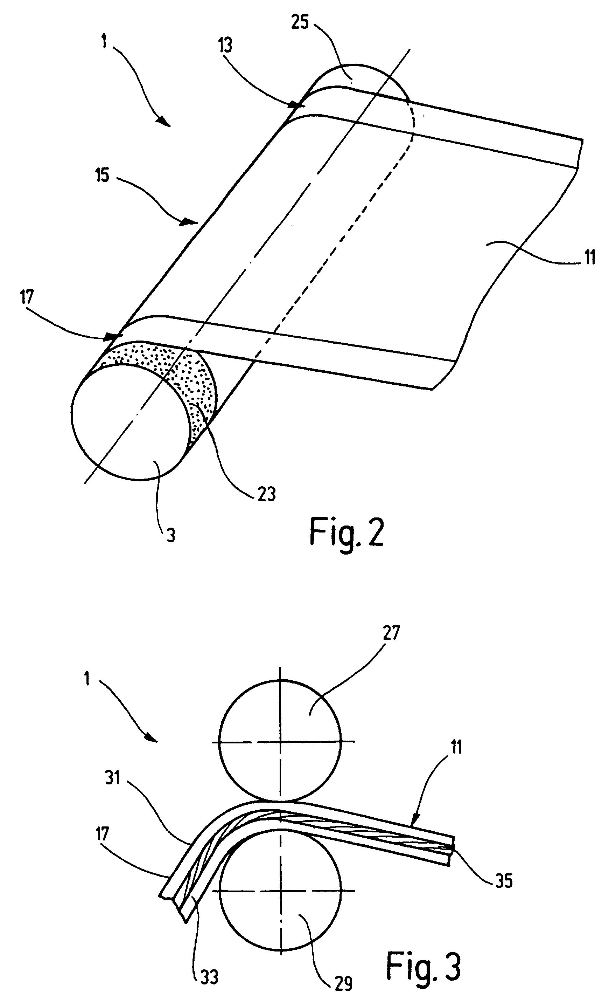

Figur 2 zeigt wiederum einen Ausschnitt einer Maschine 1 zur Herstellung einer Materialbahn, insbesondere Papier- oder Kartonbahn. In der hier wiedergegebenen Skizze wird deutlich, daß die Walze 3, deren Lagerzapfen aus Gründen der Übersichtlichkeit hier nicht dargestellt sind, in ihrem Randbereich 23 speziell auf den Randbereich 17 des Bandes 11 abgestimmt ist. Es ist beispielsweise möglich, die Oberfläche in diesem Randbereich 23 so auszugestalten, daß sich ein sehr hoher Reibungsbeiwert einstellt. Vorzugsweise ist vorgesehen, daß gleichzeitig ein möglichst hoher Verschleißwiderstand gegeben ist.

Vorzugsweise wird gleichzeitig auch vorgesehen, die Oberfläche der randständigen Zone 17, die mit dem Randbereich 23 des Bandes 11 in Berührung tritt, ebenfalls so auszugestalten, daß sich ein hoher Reibungsbeiwert bei minimalem Verschleiß ergibt.

Es ist im übrigen denkbar, zwischen der Zone 17 des Bandes 11 und dem Randbereich 23 der Walze 3 quasi einen Formschluß zu erzeugen, indem beide Seiten mit Vertiefungen und Vorsprüngen versehen werden, die -beispielsweise wie bei einem Zahnriemen- miteinander zusammenwirken.

Es ist schließlich auch möglich, den gegenüberliegenden Randbereich 25 der Walze 3 so auszugestalten wie den Randbereich 23, also die Oberfläche mit einem hohen Reibungsbeiwert zu versehen, wobei gleichzeitig ein hoher Verschleißwiderstand sichergestellt sein sollte. Denkbar ist es, auch die Oberfläche der Zone 13, die dem Randbereich 25 zugewandt ist, mit einer derartigen Oberflächengestaltung zu versehen, oder auch hier einen Formschluß durch Vorsprünge und Vertiefungen zu gewährleisten.

Eine besonders gute Übertragung der Antriebskräfte im Bereich der Zonen 13 und 17 beziehungsweise der Randbereiche 23 und 25 kann auch durch eine Aufrauhung sowohl des Bandes 11 in diesen Zonen als auch der Walze 3 in diesen Randbereichen erreicht werden.

Auch durch geeignete Materialpaarungen für die Randbereiche 23, 25 und die diesen zugewandten Oberflächen der Zonen 13 und 17 kann sichergestellt werden, daß hohe Antriebskräfte übertragen werden können.

Da die spezielle Ausgestaltung auf die randständigen Zonen 13 und 17 beziehungsweise die Randbereiche 23 und 25 beschränkt ist, werden nur geringe Antriebskräfte in die mittlere Zone 15 des Bandes 11 eingeleitet.

Figur 3 zeigt wiederum einen Ausschnitt aus einer Maschine 1 zur Herstellung einer Materialbahn, insbesondere Papier- oder Kartonbahn, nämlich einen sogenannten Preßnip, der durch zwei Preßwalzen 27 und 29 gebildet wird. Die hier in Seitenansicht dargestellte Zone 17 des Bandes 11 weist zwei Außenschichten 31 und 33 auf, die eine Mittellage 35 einschließen. Die Außenschichten sind elastischer als die Mittelschicht und ergeben in Verbindung mit den Oberflächen der Preßwalzen 27, 29 einen hohen Reibungskoeffizienten, so daß hier hohe Antriebskräfte übertragen werden können. Die Mittellage 35 ist möglichst zugsteif ausgeführt und liegt vorzugsweise im Bereich der neutralen Faser für Biegebeanspruchungen, so daß der Verschleiß auf ein Minimum reduziert ist.

Die der Zone 17 zugeordneten Randbereiche der Preßwalzen 27 und 29 können, wie die anhand von Figur 2 erläuterte Walze 3 beziehungsweise deren Randbereiche 23 und 25, so ausgelegt sein, daß sich eine besonders gute Übertragung der Antriebskräfte ergibt.

Vorzugsweise ist das Band 11 mit zwei randständigen Zonen versehen, also mit einer der Zone 17 gegenüberliegenden Zone 13, die äquivalent aufgebaut ist und ebenfalls der Übertragung von Antriebskräften dient. Das Band 11 ist vorzugsweise wiederum so ausgelegt, daß die Breite der mittleren Zone 15 auf die Breite der Materialbahn abgestimmt ist und daß die randständigen Zonen 13 und 17 mit der Materialbahn nicht in Berührung treten, damit diese nicht beeinträchtigt wird.

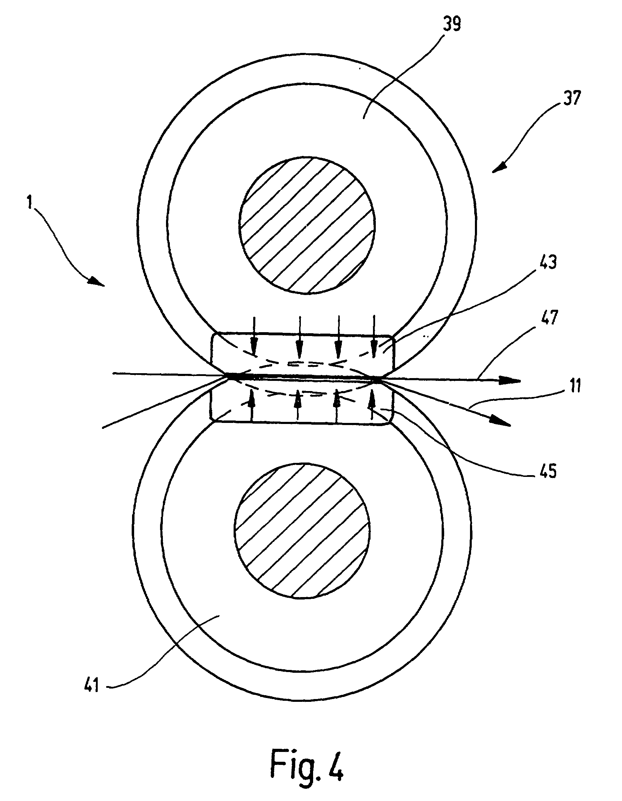

Figur 4 zeigt in Seitenansicht eine Prinzipskizze eines Teils einer Maschine 1, nämlich eine sogenannte Schuhpresse 37, die zwei Preßwalzen 39 und 41 sowie zwei Preßschuhe 43 und 45 aufweist. Zwischen den Preßschuhen wird die Materialbahn 47 hier mit einem Band 11 hindurchgeführt.

Auch hier ist vorgesehen, das Band 11 mit zwei oder drei Zonen zu versehen, nämlich mit einer der Materialbahn zugeordneten Zone und mit einer oder zwei randständigen Zonen, wie sie anhand der vorhergehenden Figuren erläutert wurden.

Insgesamt ist erkennbar, daß das Band 11 auf unterschiedlichste Weise verwendet werden kann, insbesondere im Zusammenhang mit Maschinen zur Herstellung einer Materialbahn, beispielsweise einer Papier- oder Kartonbahn.

Wesentlich ist, daß die randständigen Zonen 13 und 17 des Bandes 11 so ausgelegt sind, daß sie Antriebskräfte übertragen können, die über einen Elelktro-Motor 9 in eine Walze 3 eingeleitet werden. Die auf die Walze 3 ausgeübten Antriebskräfte können auf diese Weise von dem Band 11 auf weitere Walzen der Maschine 1 übertragen werden. Damit wird der Antrieb der Maschine wesentlich vereinfacht und ist kostengünstig realisierbar. Da auf Zahnräder, Transmissionsriemen oder dergleichen verzichtet werden kann, ist auch die Lärmentwicklung einer derartigen Maschine bei Verwendung eines Bandes 11 der hier beschriebenen Art wesentlich reduziert. Auf Steuer- und/oder Regeleinrichtungen zur Synchronisation der Walzendrehung kann verzichtet werden. Die randständigen Zonen 13 und 17 sind vorzugsweise so ausgebildet, daß sich ein hoher Reibungsbeiwert zwischen dem Band 11 und den angetriebenen Walzen ergibt. Dabei ist es letztlich belanglos, welche Art Walzen mit dem Band 11 zusammenwirken. Es ist also auch möglich, Antriebskräfte zwischen Preßwalzen und dem Band zu übertragen, also von Preßwalzen ausgeübte Antriebskräfte auf nachfolgende Walzen einer Maschine 1 zu übertragen.

Die Übertragung der Antriebskräfte kann durch eine spezielle Materialpaarung zwischen Band und Walze, aber auch durch spezielle Ausgestaltung der Oberflächen der randständigen Zonen 13 und 15 und der zugeordneten Randbereiche 23 und 25 einer Walze 3 gefördert werden, wobei hier auch ein Formschluß im Sinne eines Zahnriemens denkbar ist. In allen Fällen ist die für die Übertragung der Antriebskräfte spezielle Ausgestaltung der randständigen Zonen unabhängig von der Ausgestaltung der mittleren Zone 15, auf der die Materialbahn aufliegt.

Besonders vorteilhaft ist es, daß das Band 11 auch in bestehende Maschinen 1 eingebaut werden kann, wodurch deren Antrieb vereinfacht werden kann. Es ist also möglich, bestehende Maschinen nachzurüsten und im Zuge dieser Nachrüstung bezüglich des Antriebs zu vereinfachen.

Da die randständigen Zonen 13 und 17 speziell auf die Übertragung von Antriebskräften ausgelegt und extrem zugsteif sind, tritt eine Dehnung des Bandes 11 im Betrieb der Maschine -wenn überhaupt- nur in äußerst geringem Umfang auf, so daß eine Dehnung der Materialbahn oder Relativbewegungen zwischen dem Band 11 und der Materialbahn praktisch ausgeschlossen sind. Es können daher auf einfache Weise wesentlich verbesserte Qualitätseigenschaften der Materialbahn erreicht werden.

Es hat sich im übrigen gezeigt, daß bei der Maschine 1 durch Einsatz des Bandes 11 eine sehr wirkungsvolle Kraftübertragung gegeben ist, so daß auch schwach umschlungene Walzen effektiv angetrieben werden können, da ausreichend hohe Antriebskräfte wirken. Die Antriebsleistung wird mit Hilfe des Bandes 11 auf alle Walzen übertragen, so daß Schlupf und Drehzahlunterschiede minimiert werden. Die die Materialbahn tragende Zone 15 des Bandes 11 wird damit entlastet.

## Patentansprüche

1. Maschine zur Herstellung einer kontinuierlichen Materialbahn, insbesondere Papier- oder Kartonbahn, mit einer Anzahl von Walzen (3, 27, 29, 39, 41), um die die Materialbahn gemeinsam mit mindestens einem Band (11) geführt wird, wobei das Band (11) - über seine Breite - mindestens zwei Zonen (13,15,17) mit unterschiedlichen Eigenschaften aufweist, **dadurch gekennzeichnet, dass**
wenigstens eine der Zonen (13;17) darauf ausgelegt ist, Antriebskräfte auf durch das Band (11) anzutreibende Walzen (27, 29; 39, 41) zu übertragen, dass die Breite des Bandes (11) auf die Breite der Materialbahn (47) so abgestimmt ist, dass die der Übertragung von Antriebskräften dienende (n) Zone (n) außerhalb des Bereichs liegen, in dem die Materialbahn mit dem Band in Berührung tritt, dass die der Übertragung von Antriebskräften dienende (n) Zone (n) ein Material mit hoher Zugsteifigkeit umfasst und dass das Band (11) aus Gewebe besteht, das in der/den der Übertragung von Antriebskräften dienende (n) Zone (n) wesentlich mehr Fäden oder Bänder in Laufrichtung enthält als in Querrichtung.

2. Maschine nach Anspruch 1, **dadurch gekennzeichnet, dass**
die der Übertragung von Antriebskräften zugeordnete (n) Zone (n) (13;17) randständig ist/sind.

3. Maschine nach Anspruch 1 oder 2, **dadurch gekennzeichnet, dass**
das Band (11) drei Zonen (13, 15, 17) aufweist, von denen vorzugsweise die beiden randständigen Zonen (13, 17) für die Übertragung von Antriebskräften ausgelegt sind.

4. Maschine nach einem der vorhergehenden Ansprüche, **dadurch gekennzeichnet, dass**
zumindest eine Oberfläche der der Übertragung von Antriebskräften dienende (n) Zone (n) ein Material mit hohem Reibungsbeiwert umfasst.

5. Maschine nach einem der vorhergehenden Ansprüche, **dadurch gekennzeichnet, dass**
die mit der/den der Übertragung von Antriebskräften dienende (n) Zone (n) zusammenwirkenden Oberflächen der Walzen (3; 27, 29; 39, 41) zumindest bereichsweise ein Material mit hohem Reibungsbeiwert umfassen.

6. Maschine nach einem der vorhergehenden Ansprüche, **dadurch gekennzeichnet, dass**
die der Übertragung von Antriebskräften dienende (n) Zone (n) (13, 17) aufgerauht und/oder mit Vorsprüngen/Vertiefungen versehen sind, die mit Vertiefungen/Vorsprüngen auf den Walzen (3; 27, 29; 39, 41) zusammenwirken.

7. Maschine nach einem der vorhergehenden Ansprüche, **dadurch gekennzeichnet, dass**
das Band als Siebband ausgebildet ist.

8. Maschine nach einem der vorhergehenden Ansprüche, **dadurch gekennzeichnet, dass**
das Band als Filz ausgelegt ist.

9. Maschine nach einem der vorhergehenden Ansprüche, **dadurch gekennzeichnet, dass**
das Band als Trockensieb ausgebildet ist.

10. Maschine nach einem der vorhergehenden Ansprüche, **dadurch gekennzeichnet, dass**
das Band als Pressmantel ausgelegt ist.

## Claims

1. Machine for producing a continuous material web, in particular a paper or board web, having a number of rolls (3, 27, 29, 39, 41), around which the material web is guided together with at least one belt (11), the belt (11) having - over its width - at least two zones (13, 15, 17) with different properties, **characterized in that** at least one of the zones (13; 17) is designed to transmit drive forces to rolls (27, 29; 39, 41) to be driven by the belt (11), **in that** the width of the belt (11) is matched to the width of the material web (47) in such a way that the zone(s) serving to transmit drive forces is/are located outside the region in which the material web comes into contact with the belt, **in that** the zone(s) serving to transmit drive forces is/are composed of a material with a high tensile stiffness, and **in that** the belt (11) consists of fabric which, in the zone(s) serving to transmit drive forces, has significantly more filaments or belts in the running direction than in the transverse direction.

2. Machine according to Claim 1, **characterized in that** the zone (s) (13; 17) associated with the transmission of drive forces is/are marginal.

3. Machine according to Claim 1 1 or 2, **characterized in that** the belt (11) has three zones (13, 15 17), of which preferably the two marginal zones (13, 17) are designed for the transmission of drive forces.

4. Machine according to one of the preceding claims, **characterized in that** at least one surface of the zone(s) serving to transmit drive forces is composed of a material with a high coefficient of friction.

5. Machine according to one of the preceding claims, **characterized in that** the surfaces of the rolls (3; 27; 29; 39, 41) which interact with the zone(s) serving to transmit drive forces are composed of a material with a high coefficient of friction, at least in some regions.

6. Machine according to one of the preceding claims, **characterized in that** the zone(s) (13, 17) serving to transmit drive forces is/are roughened and/or provided with projections/depressions, which interact with depressions/projections on the rolls (3; 27, 29; 39, 41).

7. Machine according to one of the preceding claims, **characterized in that** the belt is constructed as a wire mesh belt.

8. Machine according to one of the preceding claims, **characterized in that** the belt is designed as a felt.

9. Machine according to one of the preceding claims, **characterized in that** the belt is constructed as a drying fabric.

10. Machine according to one of the preceding claims, **characterized in that** the belt is designed as a press cover.

## Revendications

1. Machine pour la fabrication d'une laize continue de matière, en particulier une laize de papier ou de carton, dotée d'une pluralité de cylindres (3, 27, 29, 39, 41) autour desquels la laize de matière est guidée en même temps qu'au moins une bande (11), la bande (11) présentant sur sa largeur au moins deux zones (13, 15, 17) dont les propriétés sont différentes, **caractérisée en ce qu'**au moins l'une des zones (13; 17) est conçue de manière à transmettre des forces d'entraînement sur les cylindres (27, 29; 39, 41) qui doivent être entraînés par la bande (11), **en ce que** la largeur de la bande (11) est accordée à la largeur de la laize de matière (47) de telle sorte que la ou les zones qui servent à transmettre des forces d'entraînement soient situées à l'extérieur de la zone dans laquelle la laize de matière entre en contact avec la bande, **en ce que** la ou les zones qui servent à transmettre des forces d'entraînement comprennent un matériau présentant une haute résistance en traction et **en ce que** la bande (11) est constituée d'un tissu qui contient dans sa ou ses zones qui servent à transmettre des forces d'entraînement beaucoup plus de fils ou de bandes dans la direction d'avancement que dans la direction transversale.

2. Machine selon la revendication 1, **caractérisée en ce que** la ou les zones (13; 17) associées à la transmission de forces d'entraînement ont des bords résistants.

3. Machine selon la revendication 1 ou 2, **caractérisée en ce que** la bande (11) présente trois zones (13 , 15, 17) parmi lesquelles de préférence les deux zones (13, 17) à résistance de bordure sont conçues pour la transmission de forces d'entraînement.

4. Machine selon l'une des revendications précédentes, **caractérisée en ce qu'**au moins une surface de la ou des zones qui servent à transmettre des forces d'entraînement comprend un matériau à haut coefficient de frottement.

5. Machine selon l'une des revendications précédentes, **caractérisée en ce que** les surfaces des cylindres (3; 27, 29; 39, 41) qui coopèrent avec la ou les zones qui servent à transmettre des forces d'entraînement comprennent au moins sur certaines parties un matériau à haut coefficient de frottement.

6. Machine selon l'une des revendications précédentes, **caractérisée en ce que** la ou les zones (13, 17) qui servent à transmettre des forces d'entraînement sont rendues rugueuses et/ou dotées de saillies/creux qui coopèrent avec des saillies/creux prévus sur les cylindres (3; 27, 29; 39, 41).

7. Machine selon l'une des revendications précédentes, **caractérisée en ce que** la bande est configurée comme bande de tamis.

8. Machine selon l'une des revendications précédentes, **caractérisée en ce que** la bande est réalisée comme feutre.

9. Machine selon l'une des revendications précédentes, **caractérisée en ce que** la bande est configurée comme filtre à sec.

10. Machine selon l'une des revendications précédentes, **caractérisée en ce que** la bande est conçue comme enveloppe de pressage.
